Europäisches Patentamt

European Patent Office

Office européen des brevets

(11) Publication number: 0 237 198
A2

(12) **EUROPEAN PATENT APPLICATION**

(21) Application number: 87301228.0

(51) Int. Cl.⁴: **C04B 35/64**

(22) Date of filing: 12.02.87

The title of the invention has been amended (Guidelines for Examination in the EPO, A-III, 7.3).

(30) Priority: 12.02.86 US 828802

(43) Date of publication of application:
16.09.87 Bulletin 87/38

(84) Designated Contracting States:
AT BE CH DE ES FR GB IT LI NL SE

(71) Applicant: THE DOW CHEMICAL COMPANY
2030 Dow Center Abbott Road P.O. Box 1967
Midland, MI 48640(US)

(72) Inventor: Pechenik, Alexander
424 Kelton Avenue Apt. No. 304
Los Angeles California 90027(US)
Inventor: Russell, Patrick M.
4451 Wise Road
Midland Michigan 48640(US)
Inventor: Prunier, Arthur, R., Jr.
711 Linwood Drive
Midland Michigan 48640(US)
Inventor: McDonald, Robert R.
1117 Quaker Valley Drive
Traverse City Michigan 49684(US)
Inventor: Spangenberg, Stanley F.
4310 Andre
Midland Michigan 48640(US)

(74) Representative: Burford, Anthony Frederick et al
W.H. Beck, Greener & Co. 7 Stone Buildings
Lincoln's Inn
London WC2A 3SZ(GB)

(54) Method for producing ceramic bodies by hot pressing.

(57) A ceramic body is prepared by heating a ceramic material between the lowest temperature at which sufficient deformation occurs in order to achieve the desired density and 2000°C, applying to the ceramic material a pressure between 50,000 to 350,000 psi (300 to 2400 MPa), at a pressing time preferably less than 15 minutes, to obtain a ceramic body having preferably a density of at least 85 percent of its theoretical density.

EP 0 237 198 A2

# NOVEL METHOD FOR PRODUCING CERAMIC BODIES

This invention concerns a novel process for producing ceramic bodies and the ceramic bodies produced by the process.

Some methods known for preparing ceramic bodies involve (a) hot pressing of powdered or compacted samples in a close-fitting, rigid mold or (b) hot isostatically pressing ("hipping") a sealed, deformable container having a powdered or compacted sample utilizing a gas as the pressure-transmitting medium. In both of these methods, the sample, whether originally a powder or compact, assumes the shape of the mold or deformed container. Several problems are encountered when such methods are used. For example, the sizes and shapes of articles that can be produced are limited; finished ceramic bodies having complex shapes often contain undesirable density gradients because of nonuniform pressure distribution during pressing. Also, each sample must be compressed in a separate mold or container and after hot pressing the sample often adheres to the mold or container during separation.

Isostatic pressing of self-sustaining compacts (e.g., ceramic preforms) has been suggested as a possible method of overcoming the above-mentioned problems. For example, U. S. Patent 3,279,917 discloses the use of a particulate material such as powdered glass or graphite as a pressure-transmitting medium in the hot pressing of refractory bodies. In this method, the particulate pressure-transmitting medium does not conform completely to the sample and as a consequence, pressure is still not transmitted uniformly and truly isostatically. Various shapes such as cubes, round rods and the like are distorted when pressure is applied. It is virtually impossible to form intricate contours by this method.

U. S. Patent 3,455,682 discloses an improved method of hot isostatically pressing (i.e., "hipping") refractory bodies which comprises the following steps: (A) surrounding the body with a mixture consisting essentially of from 5 percent to 40 percent by weight of a first component selected from alkali and alkaline earth metal chlorides, fluorides and silicates and mixtures thereof and from 60 to 95 percent by weight of a second component selected from silica, alumina, zirconia, magnesia, calcium oxide, spinels, mullite, anhydrous aluminosilicates and mixtures; thereof; (B) heating said mixture to a temperature at which it is plastic; and (C) while maintaining said temperature, applying to said mixture sufficient pressure to increase the density of said body. It is taught that in this manner, low porosity, refractory bodies having a variety of shapes and sizes can be compressed to extremely low porosity and very high density without substantially altering their original shape.

U. S. Patent 4,428,906 discloses a method for densifying material of metallic and nonmetallic compositions and combinations thereof to form a densified compact of a predetermined density wherein a quantity of such material which is less dense than the predetermined density, is encapsulated in a pressure-transmitting medium to which external pressure is applied to the entire exterior of the medium to cause the predetermined densification of the encapsulated material by hydrostatic pressure applied by the medium in response to the medium being substantially fully dense and incompressible and capable of fluidic flow, at least just prior to the predetermined densification. The invention is characterized by utilizing a pressure-transmitting medium of a rigid interconnected skeletal structure, which is collapsible in response to a predetermined force, and fluidizing means capable of fluidity and supported by and retained within the skeletal structure for forming a composite of skeletal structure fragments dispersed in the fluidizing means in response to collapse of the skeletal structure at the predetermined force and for rendering the composite substantially fully dense and incompressible and fluidic at the predetermined densification of the compact.

U.S. Patent 4,562,090 discloses a method of densifying a coating on a substrate by use of thermal and compressive stresses using a gas or solid pressure transfer medium. The substrates are steels, metal alloys or metals or non-ferrous metal alloys. The coatings are metal alloys, metals, particularly high wear and corrosion resistant metal alloys.

Surprisingly, the present invention provides a process for densifying ceramic materials by use of a combination of heat and isostatic pressure which results in a densified ceramic body, which can be in any highly complex shape at a density at a least 85 percent of theoretical density.

One aspect of this invention provides a process for producing a ceramic body comprising:
heating a ceramic material to a temperature between the lowest temperature at which sufficient deformation occurs in order to achieve the desired density and 2000°C; and
applying to said ceramic material a pressure between 50.000 psi (3.5 x $10^2$ MPa) and 350.000 psi (24 x $10^2$ MPa), while maintaining the above temperature, for a sufficient period of time to increase the density of said ceramic material to form a ceramic body of a predetermined density.

2

This above process can include:

applying pressure to the ceramic material from 0.1 second to 15 minutes;

to obtain a ceramic body having a density of at least 85 percent of its theoretical density.

Another aspect of this invention provides a high density ceramic body prepared by the present process.

In general, any ceramic which comprises an inorganic, nonmetallic material as its essential component is useful in the process of this invention. Minor impurities may be present in the ceramic material so long as they do not substantially affect the densification of said material. Preferably, the ceramic material consists essentially of a ceramic, and more preferably, the ceramic material consists of a ceramic. Useful ceramics include mixed ceramics such as cordierite. Preferred ceramics include oxides, carbides, nitrides, silicides, borides, sulfides and mixtures thereof. More preferred ceramics include magnesia, mullite, thoria, beryllia, urania, spinels, zirconium oxide, bismuth oxide, aluminum oxide, indium oxide chromium oxide, hafnium oxide, scandium oxide, niobium oxide, lanthanum oxide, tantalum oxide, yttrium oxide, ferrites, lead titanates, lead niobates, barium titanate, cordierite, boron nitride, tungsten carbide, tantalum carbide, titanium carbide, niobium carbide, zirconium carbide, boron carbide, hafnium carbide, silicon carbide, aluminum nitride, titanium nitride, zirconium nitride, tantalum nitride, hafnium nitride, niobium nitride, boron nitride, silicon nitride, titanium boride, chromium boride, zirconium boride, tantalum boride, molybdenum boride, tungsten boride, aluminum boride, silicon boride, cerium sulfide, molybdenum sulfide, cadmium sulfide, zinc sulfide, titanium sulfide, magnesium sulfide, zirconium sulfide; molybdenum silicide, mixtures and composites thereof. Even more preferred ceramics include spinels, zirconium oxide, aluminum oxide, magnesium oxide, hafnium oxide, niobium oxide, chromium oxide, tantalum oxide, yttrium oxide, scandium oxide, indium oxide, lanthanum oxide, silicon carbide, hafnium carbide, titanium carbide, niobium carbide, vanadium carbide, tantalum carbide, zirconium carbide, cordierite, or silicon nitride, molybdenum silicide, aluminum nitride, silicon boride, aluminum boride, barium titanate, ferrites, lead titanates, lead niobates, or mixtures or composites thereof. Even more preferred ceramics are zirconium oxide, aluminum oxide and magnesium oxide. The most preferred ceramic is zirconium oxide. The zirconium oxide may be stabilized with yttrium oxide, magnesium oxide or with any other material having stabilizing properties.

The ceramic material can comprise mixtures of the above listed ceramics, especially $MoSi_2/SiC$, $MgO/SiC$, $BeO/SiC$, $SiAlON/SiC$, $TiC/B_4C$, $ZrC/SiC$, $MgO/Si_3N_4$, $Si_3N_4/Y_2O_3$, $SiO_2/Y_2O_3/Si_3N_4$, $Al_2O_3/ZrO_2$, $Al_2O_3/TiC$, $AlN/Y_2O_3/SiO_2$; $ZrO_2/In_2O_3$, $Cr_2O_3/ZrO_2$, $Al_2O_3/Cr_2O_3/ZrO_2$, mullite/$ZrO_2$, $ZrO_2/Y_2O_3/Ta_2O_5$, $AlN/SiC$, AlON and SiAlON. Other ceramic materials also included are $Bi_{1.6}Er_{0.4}O_3$ and $Bi_{1.5}Y_{0.5}O_3$ as well as other mixed ceramic materials.

In one preferred embodiment, the ceramic material to be densified is particulate and has a particle size of about 100 microns or less, more preferably about 10 microns or less; still more preferably about 1 micron or less and most preferably between 100 and 10,000 angstroms (10 to 1000 nm). The description of preferred particle sizes is given for a substantially mono-modal particle size distribution. It will be recognized by those skilled in the art that small quantities of particles of considerably smaller size than the size of the main proportion of particulate may be intermixed therewith to achieve a higher packing density for a given degree of densification.

In one preferred embodiment of this invention, fibrous ceramic material or other reinforcing ceramic material may be mixed with the particulate ceramic material. It is believed that incorporation of fibrous ceramic material or other reinforcing ceramic material may increase the strength and fracture toughness of the ceramic body produced.

In accordance with the present invention, the ceramic material may be compressed and shaped in a preliminary operation to preferably generate a ceramic preform having the desired shape of the final product. Said ceramic preform will preferably have sufficient density to substantially retain its shape during handling and further processing. In practice, the ceramic preform may be prepared by placing the ceramic material in a press and partially densifying the material by pressure application. The resulting partially densified material may be referred to as a ceramic preform. Such pressing is normally done under ambient temperatures. Internal lubricants such as waxes, or a material such as polyethylene, may be used during preparation of the ceramic preform to produce a higher density. An external lubricant, such as Methocel® or zirconium nitride, may be used to prevent galling of a die punch in a press, (e.g., a uniaxial press). In one preferred embodiment, a rigid mold may be used to apply the pressure. Suitable pressures are generally between 200 psi (1.5 MPa) and 10,000 psi ( 7 x 10¹ MPa). In another preferred embodiment, the ceramic material may be pressed directly in a steel or tungsten carbide die in a powder metallurgy press. In a third preferred embodiment, the ceramic material may be charged into a thin-walled rubber mold which is evacuated, sealed and subjected to isostatic pressure in a liquid medium at ambient temperatures and pressures of from 1,000 psi ( 7 MPa) to 30,000 psi (2 x $10^2$ MPa). In one preferred embodiment, the ceramic preform, prepared by any of the above processes, has a density of between 30 percent and 85 percent, more preferably between 60 and 85 percent.

The conditions at which the ceramic material is densified may be critical in the preparation of a ceramic body. Four desirable parameters are: (1) the additives to enhance binding, (2) the temperature at which the binding proceeds, (3) the pressure used to achieve such binding, and (4) the time period over which such pressure is applied. It is further desired that the pressure be applied in a substantially isostatic manner. Isostatic pressure refers herein to pressure which is applied evenly to all portions of the material to be densified, regardless of shape or size.

The particular additives, pressure, temperature and time to give the desired results are dependent upon the particular ceramic material chosen. Those skilled in the art may choose the appropriate additives, pressures, temperatures and time based upon the teachings contained herein.

Temperatures useful in this invention are preferably between the lowest temperature at which sufficient deformation occurs in order to achieve the desired density and 2000°C.

Deformation means the temperature at which the ceramic material is sufficiently plastic to permit the desired compaction. Obviously, the temperature determines the pressure at which the desired compaction can occur. It must be recognized that the temperatures which are useful for a particular ceramic material may be dependent upon the properties of that material, and one skilled in the art would recognize those temperatures which are useful based upon the functional description provided. Preferably, the temperature is greater than that at which a pressure of 100,000 psi ( 7 x $10^2$ MPa) will achieve at least 85 percent of theoretical density within 2 seconds and less than that temperature at which the ceramic material undergoes recrystallization and grain growth. The preferred temperature for densifying zirconium oxide is about 1100°C.

The pressure applied to the ceramic material is preferably between 50,000 psi (3.5 x $10^2$ MPa) and 350,000 psi (24 x $10^2$ MPa); more preferably between 70,000 psi ( 5 x $10^2$ MPa) and 350,000 psi (24 x $10^2$ MPa); and most preferably between 100,000 psi ( 7 x $10^2$ MPa) and 250,000 psi ( 17 x $10^2$ MPa). In a preferred embodiment of this invention, the pressure is preferably applied in a substantially isostatic manner and in an amount sufficient to permanently reduce the volume (i.e., densification) of the ceramic material. Preferably, the pressure is applied in an amount sufficient to densify the ceramic material to at least 85 percent of theoretical density in less than 15 minutes at a temperature below the melting temperature of the ceramic material. More preferably the pressure is sufficient to accomplish the above-described densification in less than about 1 minute, even more preferably in less than about 10 seconds, and most preferably in less than about 5 seconds. A rate of pressure increase greater than about 1,000 psi/sec ( 7 MPa/sec) is preferred and a rate of pressure increase greater than 10,000 psi/sec ( 7 x $10^1$ MPa/sec) is more preferred. It is believed that if the pressure used is too high, the ceramic bodies prepared may fracture and if the pressure used is too low, the ceramic bodies prepared may have a density too low for desired uses.

In accordance with this invention, pressure is applied for a sufficient time to densify the ceramic material to a predetermined density. The time in which the ceramic material is exposed to the desired pressure is preferably between that time sufficient for said material to reach at least 85 percent of its theoretical density and that time in which the ceramic material fractures. The pressure applied to the ceramic material to effect densification is preferably sustained for a period of time greater than 0.1 second. It is believed that the application of sustained pressure to the ceramic material may cause plastic deformation thereby resulting in an improved densification process. It has been discovered that times of between 0.1 second and 15 minutes are generally suitable for achievement of the desired densification. The preferred time for achievement of the desired densification is between 0.1 second and 15 minutes; more preferred is between 0.1 second and 1 minute; even more preferred is between 0.1 second and 10 seconds; still more preferred is between 0.5 second and 5 seconds and still more preferred is between 1 second and 5 seconds. The most preferred time is 2 seconds.

The ceramic bodies of this invention may be prepared in a substantially solid state process. A solid state process refers herein to a procedure whereby the ceramic material is densified while in a substantially solid state. The prior art teaches that the ceramic material may undergo recrystallization and agglomeration of the ceramic particles during densification resulting in large ceramic grain particles. It is believed that one advantage of this invention is that it allows significantly lower temperatures and times for densification of ceramic bodies thereby minimizing grain growth during densification.

It should be recognized that there are practical considerations which will dominate the selection of the proper time, temperature and pressure variables according to this invention. Generally, the time variable may be minimized (in terms of utility of this invention) to avoid getting into temperature/time ranges so high that the grain structure begins to appreciably reshapen and coarsen. High pressure and high temperature both accelerate ceramic flow; therefore, both should be maximized subject to the constraint that the grains should not appreciably increase in size. It is believed that at the particular temperatures and pressure used in this invention there may be enhanced mobility of dislocations in the ceramic body during densification. It will be evident to those skilled in the art that grain growth inhibitors may be used to extend the range of practice of this invention.

Isostatic pressure may be applied to the ceramic material or the ceramic preform. Various methods of applying isostatic pressure are known to those skilled in the art. All such methods which allow for the use of the preferred parameters of time, temperature and pressure as described hereinabove are useful.

Thereafter, the densified material encapsulated within the pressure-transmitting medium may be cooled. The pressure-transmitting medium may then be a rigid and frangible brick which may be removed from the container by shattering it into fragments, as by striking with a hammer or the like.

One preferred container useful for the densification of powdered binder material and refractory ceramic material using isostatic pressure is disclosed by U. S. Reissue Patent 31,355.

Such containers can be made of any material which retains its structural integrity but is capable of plastic flow at the pressing temperatures. Included among acceptable materials would be low carbon steel, other metals with the desired properties, glass, ceramics or combinations thereof. The choice of the particular material would depend upon the temperatures at which the particular binder material and refractory ceramic material would be densified. Generally, two pieces of the material which would be used to make the container are machined to prepare a mold which has upper and lower die sections. These are thereafter joined along their mating surfaces such that the upper and lower die sections form a cavity having a predetermined desired configuration. The size and shape of the cavity is determined in view of the final shape of the part to be produced. Before the upper and lower die sections are assembled, a hole is drilled in one of the die sections and a fill tube is inserted. After the fill tube has been attached, the two die sections are placed in a mating relationship and welded together. Care is taken during welding to ensure that a hermetic seal is produced to permit evacuation. Thereafter, the container is evacuated and filled with the powder to be densified through the fill tube. The fill tube is then hermetically sealed by pinching it closed and welding it.

Thereafter, the container is exposed to isostatic pressure at the desired binding and densification temperatures. This can be done by the methods described hereinabove. Alternatively, the filled and sealed container can be placed in an autoclave, and subjected to the temperatures and pressures desired for the binding and densification. The pressure in the autoclave on the container is isostatic and because the container is able to retain its configuration and has plastic-like tendencies, the container will exert isostatic pressure on the powders to be densified. The size of the cavity in the container will shrink until the powder therein reaches the desired density. After densification, the container can be removed from the autoclave and cooled. The container is then removed from the densified refractory material by pickling in a nitric acid solution. Alternatively, the container can be removed by machining or a combination of rough machining followed by pickling.

In the practice of the invention, a container is prepared as described in U. S. Reissue Patent 31,355 described hereinabove and the isostatic pressure can be exerted on such container as described hereinabove. The container, once the powdered binder and refractory ceramic material are densified, is exposed to temperatures at which such container will melt without affecting the properties of the refractory body so prepared. Thereafter, the molten material or metal which has been melted away from the refractory body can thereafter be recycled to form a new container.

Other preferred methods of applying isostatic pressure through a pressure-transmitting medium to the ceramic preform are described in U. S. Patents 3,455,682; 4,142,888; 4,094,709; 4,255,103; 3,230,286; 3,824,097; 4,023,466; 3,650,646; 3,841,870; 4,041,123; 4,077,109; 4,081,272; and 4,339,271.

In a preferred embodiment, the ceramic preform may be encapsulated in a protective barrier prior to placing the ceramic preform in a container. The use of a barrier may prevent glass from penetrating into pores in the ceramic body during the hot pressing and may facilitate removal of the ceramic body from the glass/ceramic die because of differential expansion and barrier toughness. The protection barrier may be any metal which has a melting point greater than that of the glass/ceramic die, is substantially inert to the processing of the ceramic body and is plastically deformable. A preferred protective barrier may comprise tantalum, gold, platinum, other relatively inert metals and alloys thereof.

The ceramic bodies of this invention preferably have a density of about 85 percent or greater, more preferably about 90 percent or greater, even more preferably about 95 percent or greater, and most preferably about 100 percent. High density refers herein to a density of about 90 percent or greater of theoretical density.

The ceramic bodies of this invention preferably have an average grain size of about 100 microns or less; more preferably about 10 microns or less; still more preferably about 1 micron or less; and most preferably between 100 and 10,000 angstroms (10-1000 nm).

In one preferred embodiment, the refractory material comprises zirconium oxide stabilized with yttrium oxide. However, the zirconium oxide may be stabilized with any appropriate oxide. The zirconium oxide ceramic body of this invention exhibited greater Vickers hardness than prossessed by known zirconium oxide ceramic bodies. Preferably, the zirconium oxide ceramic body exhibits Vickers hardness greater than about 1200 kg/mm$^2$, more preferably greater than about 1300 kg/mm$^2$, and even more preferably greater than about 1450 kg/mm$^2$. The measurement of Vickers hardness of the ceramic bodies is done in accordance with methods known by those skilled in the art as described in the 1984 Annual Book of ASTM Standards, pp. 442-461, in accordance with ASTM E 384-73.

The following examples are included for illustrative purposes only, and are not intended to limit the scope of the invention or claims. Unless otherwise stated, all parts and percentages are by volume.

Example 1

A ceramic preform of zirconium oxide powder (10-50 microns) was formed using a uniaxial press at room temperature and Methocel® as an external die lubricant. The resulting ceramic preform was heated for 2 hours at 200°C to remove residual moisture resulting in a density of about 3.7 g/cm$^3$ (63 percent theoretical). The ceramic preform was placed in a ceramic/glass die and heated to about 1100°C over a period of 2 hours. The heated ceramic preform contained in the die was thereafter placed in a press and subjected to about 120,000 psi (8 x 10$^2$ MPa) of isostatic pressure for about 2 seconds. The ceramic body recovered has a density of about 5.4 g/cm$^3$ (93 percent theoretical).

Example 2

A ceramic preform of yttrium oxide stabilized zirconium oxide was formed by substantially the same process as in Example 1, resulting in a ceramic preform having a density of 3.5 g/cm$^3$ (54 percent theoretical). The ceramic preform was encapsulated in tantalum foil, placed in a ceramic/glass die and heated in an argon purged furnace to about 1100°C over a period of 2 hours. The ceramic preform contained in the die was placed in a press and subjected to about 120,000 psi (8 x 10$^2$ MPa) of substantially isostatic pressure for about 2 seconds. Following densification, the ceramic body and die were heated for 1 hour at 500°C in a nitrogen atmosphere so that the tantalum will form tantalum nitride thereby allowing its complete removal from the ceramic body. Ther ceramic body recovered has a density of about 5.8 g/cm$^3$ - (95 percent theoretical).

Example 3

A ceramic preform of yttrium oxide stabilized zirconium oxide powder (10-50 microns) was formed using a uniaxial press (21,000 psi, 150 MPa) at room temperature without external die lubricants. The preform's density was about 2.8 g/cm$^3$. The ceramic preform was placed in a Pyrex® cullet surrounded by a glass/ceramic die and heated to about 1100°C over a period of 1-1/2 hours in an argon atmosphere. The heated body was then isostatically pressed at 109,000 psi (750 MPa) for about 2 seconds. The ceramic body recovered has a density of 6.0 g/cm$^3$ (99 percent theoretical). The ceramic body exhibited a Vickers hardness of 1302 kg/mm.

Examples 4-10

Examples 4-10 are formed by substantially the same process as in Example 1. The ceramic preforms contained in a ceramic/glass die were heated over a period of 2 hours to the indicated temperatures. The heated ceramic preforms were then placed in a press and subjected to about 120,000 psi ($8 \times 10^2$ MPa) of isostatic pressure for about 2 seconds. Table I lists the different refractory materials and process parameters used, (ksi equals 1,000 pounds/$in^2$-psi) and the theoretical density of the resulting high density ceramic bodies.

## Table I

| Material | Uniaxial Press (ksi) | External Die Lubricant | Pressing Temp. (°C) | Isostatic Press (ksi) | Percent of Theoretical Density |
|---|---|---|---|---|---|
| Magnesium Oxide | 58 | Methocel® AB | 1400 | 120 * | 100 |
| Aluminum Oxide | 58 | None | 1400 | 120 | 84 |
| Silicon Carbide | 39 | None | 1400 | 120 | 92 |
| Spinel | 20 | Zirconium Nitride | 1400 | 120 | 94 |
| Cordierite | 17 | Zirconium Nitride | 1250 | 120 | 95 |
| Barium Titanate | 39 | None | 1300 | 120 | 88 |
| Zirconium Oxide | 58 | Methocel® AB | 1250 | 120 | 97 |
| Silicon Nitride | 60 | None | 1500 | 120 | 82 |

* $(8 \times 10^2 \text{ MPa})$

Examples 11 and 12

Using substantially the procedure of Example 4, $Bi_{1.6}Er_{0.4}O_3$ and $Bi_{1.5}Y_{0.5}O_3$ were each precipitated from the nitrate salts, buffered at pH 8 with $NH_4OH/NH_4NO_3$, then the precipitates were oven dried 24 hours at 125°C. The two powders were seperately fired 1 hour at 450-550°C, pressed [cold (room temperature), uniaxial press, at 40 ksi ($2.75 \times 10^2$ MPa)] into 1.25 cm diameter by 0.75 cm thick pellets (56-65 percent of theoretical density). Both ceramic preforms were then isostatically pressed at 800°C, 120,000 psi ($8 \times 10^2$ MPa), for 2 seconds. The ceramic bodies recovered have a density of 88 to 93 percent of theoretical.

**Claims**

1. A process for producing a ceramic body comprising:
(a) heating a ceramic material to a temperature between the lowest temperature at which sufficient deformation occurs in order to achieve the desired density and 2000°C; and
(b) applying to said ceramic material a pressure between 50,000 psi ($3.5 \times 10^2$ MPa) and 350,000 psi ($24 \times 10^2$ MPa), while maintaining the above temperature, for a sufficient period of time to increase the density of said ceramic material to form a ceramic body of a predetermined density.

2. A process as claimed in Claim 1, wherein the ceramic material is a ceramic preform.

3. A process as claimed in Claim 1 or Claim 2, wherein the pressure is applied substantially isostatically.

4. A process as claimed in any one of the preceding claims, wherein the ceramic body comprises particulate ceramic material.

5. A process as claimed in Claim 4, wherein the particulate ceramic material is less than 100 microns.

6. A process as claimed in Claims 1 to 3, wherein the ceramic body comprises fibrous ceramic material.

7. A process as claimed in any one of the preceding claims, wherein the hot pressing time is between 0.1 second and 15 minutes.

8. A process as claimed in any one of the preceding claims, wherein the ceramic body has a density of 85 percent of theoretical density.

9. A process as claimed in any one of the preceding claims, wherein the ceramic material is spinels, zirconium oxide, aluminum oxide, magnesium oxide, hafnium oxide, niobium oxide, chromium oxide, tantalum oxide, yttrium oxide, scandium oxide, indium oxide, lanthanum oxide, silicon carbide, hafnium carbide, titanium carbide, niobium carbide, vanadium carbide, tantalum carbide, zirconium carbide, cordierite, or silicon nitride, molybdenum silicide, aluminum nitride, silicon boride, aluminum boride, barium titanate, ferrites, lead titanates, lead niobates, or mixtures of composites thereof.

10. A process as claimed in any one of the preceding claims, wherein the ceramic material is $MoSi_2/SiC$, $TiC/B_4C$, $ZrC/SiC$, $MgO/Si_3N_4$, $MgO/SiC$, $BeO/SiC$, $SiAlON/SiC$, $ZrO_2/In_2O_3$, $Cr_2O_3/ZrO_2$, $Al_2O_3/Cr_2O_3/ZrO_2$, $mullite/ZrO_2$, $ZrO_2/Y_2O_3/Ta_2O_5$, $Si_3N_4/Y_2O_3$, $SiO_2/Y_2O_3/Si_3N_4$, $Al_2O_3/ZrO_2$, $Al_2O_3/TiC$, $AlN/Y_2O_3/SiO_2$, $AlN/SiC$, $AlON$, or $SiAlON$.

11. A process as claimed in any one of the preceding claims, wherein the ceramic material comprises zirconium oxide.